(19) Europäisches Patentamt
European Patent Office
Office européen des brevets

(11) **EP 1 130 283 B1**

(12) **EUROPEAN PATENT SPECIFICATION**

(45) Date of publication and mention
of the grant of the patent:
**29.04.2009 Bulletin 2009/18**

(51) Int Cl.:
***F16G 5/16*** *(2006.01)*

(21) Application number: **01105054.9**

(22) Date of filing: **01.03.2001**

(54) **Thin metal ring for metal belt type nonstep variable-speed transmission**

Dünner Metallring für ein stufenloses Riemenwandelgetriebe mit metallischem Treibriemen

Anneau métallique faible pour un variateur de vitesse continûment variable à courroie métallique

(84) Designated Contracting States:
**DE NL**

(30) Priority: **01.03.2000 JP 2000055786**

(43) Date of publication of application:
**05.09.2001 Bulletin 2001/36**

(73) Proprietor: **HONDA GIKEN KOGYO KABUSHIKI KAISHA**
**Minato-ku, Tokyo (JP)**

(72) Inventor: **Kanehara, Shigeru**
**c/o K. K. Honda Gijutsu Kenkyusho**
**Wako-shi,**
**Saitama-ken (JP)**

(74) Representative: **Prechtel, Jörg et al**
**Weickmann & Weickmann**
**Patentanwälte**
**Postfach 86 08 20**
**81635 München (DE)**

(56) References cited:
**EP-A- 0 950 830**          **EP-A- 1 130 282**

• **PATENT ABSTRACTS OF JAPAN vol. 0112, no. 81 (M-624), 11 September 1987 (1987-09-11) & JP 62 080322 A (HITACHI METALS LTD), 13 April 1987 (1987-04-13)**

**Description**

BACKGROUND OF THE INVENTION

Field of the Invention

The present invention relates to metal belt type continuously (nonstep) variable transmission having a durable thin metal ring.

Description of the Related Art

In a metal belt type continuously variable transmission including a drive pulley, a driven pulley and an endless metal belt formed by engaging blocks with a layered ring formed by radially superposing thin metal rings, and extended between the drive and the driven pulley, the endless metal belt is extended between the drive and the driven pulley in a necessary tension for power transmission. When the nonstep variable-speed transmission is in operation, the thin metal rings, which are annular in an unloaded state, are stretched linearly between the drive and the driven pulley and parts of each thin metal ring in engagement with the drive and driven pulley are curved in radii of curvature smaller than the radius of a circle in which the thin metal ring are formed in an unloaded state. Consequently, tensile stress and compressive stress are induced in the bent thin metal rings. A maximum tensile stress and a maximum compressive stress are induced in the outer surface farthest from the neutral plane of each thin metal ring and the inner surface farthest from the neutral plane of the same thin metal ring. Large stresses are induced locally in the opposite side edges at the intersections of the outer circumference and the side surfaces and at the intersections of the inner circumference and the side surfaces of each thin metal ring and those side edges are subject to fatigue failure.

To avoid shortening the life due to fatigue failure, a thin metal ring disclosed in JP-B-06-6970 is shot-peened or rolled so that the thickness thereof decreases gradually from side portions toward the side edges thereof to a residual compressive stress in the side parts of the thin metal ring is greater than that in other parts of the same.

When the continuously variable transmission is in operation, tensile stress that varies according to the position on a running path is induced in addition to the tensile and compressive stress that are induced in the thin metal ring when the same is bent. If the side edges of the thin metal ring touch the pulley, a large stress is induced in the side edges. Nothing is taken into consideration in the prior art thin metal ring about the induction of such a stress in the side edges of the thin metal ring and, therefore, the durability of the prior art thin metal ring was not as high as expected.

EP 0 950 830 A on which the preamble of claim 1 is based discloses a continuously variable transmission with a multilayer endless metal belt made of a plurality of nested metal rings, wherein at least one metal ring has chamfered edges.

EP 1 130 282 A1 discloses a countinuously variable transmission having a drive pulley, a driven pulley, and an endless metal belt extended between the drive pulley and the driven pulley to transmit driving force from the drive pulley to the driven pulley, respectively effective diameters of the drive pulley and the driven pulley being continuously variable to change teh speed change ratio, wherein the endless metal belt is made upt of thin metal rings (R) layered to form layered ring structures, and a plurality of blocks arranged along and supported on the layered ring structures to form the endless metal belt wherein each of the thin metal rings (R) has a radially inner round edge (R1) at the intersection of a side surface and a radially inner circumferential surface thereof, and a radially outer round edge (R2) at the intersection of the side surface and a radially outer circumferential surface thereof, and wherein the thin metal rings (R) include an innermost thin metal ring having a radially inner round edge (R1) in contact with side surfaces of the drive pulley and the driven pulley and whereby the radius of curvature of the radially inner round edge (R1) and the radius of curvature of the radially outer round edge (R2) of the thin metal rings (R) are different and the radii (R1, R2) of curvature of the radially inner and radially outer round edges of the innermost thin metal ring are equal to the radii of curvature of the radially inner and outer round edges of the thin metal rings other than the innermost thin metal ring, respectively.

SUMMARY OF THE INVENTION

Accordingly, it is an object of the present invention to provide a metal belt type continuously variable-speed transmission with an improved, sufficiently durable thin metal ring.

According to a first aspect of the present invention than is provided a continuously variable transmission having a drive pulley, a driven pulley, and an endless metal belt extended between the drive pulley and the driven pulley to transmit driving force from the drive pulley to the driven pulley, respectively effective diameters of the drive pulley and the driven pulley being continuously variable to change the speed change ratio, wherein the endless metal belt is made up of thin metal rings layered to form layered ring structures, and a plurality of blocks arranged along and supported on the layered ring structures to form the endless metal belt, wherein each of the thin metal rings has a radially inner edge at the intersection of a side surface and a radially inner circumferential surface thereof, and a radially outer edge at the intersection of the side surface and a radially outer circumferential surface thereof, wherein the side surface of each thin metal ring has a middle flat part, and wherein the thin metal rings include an innermost thin metal ring having a radially inner edge in contact with side surfaces of the drive pulley and the driven pulley; characterized in that: the radially inner edge and the radially outer edge of the thin metal rings are rounded with different radii of curvature; and the radii of curvature on the radially inner and radially outer edges of the innermost thin metal ring are greater than the radii of curvature of the radially inner and outer edges of the thin metal rings other than the innermost thin metal ring, respectively.

The induction of a large stress in the edge at the intersection of the outer side surface and the inner circumference of the innermost ring due to contact between the edge and the side surface of the pulley groove can be avoided and the failure of the innermost thin metal ring in a short period of use can be prevented. The innermost thin metal ring does not need to be worked by a rolling process or the like for work hardening. Consequently, the innermost thin metal ring can be fabricated by a simple process in a short processing time at a low cost.

The radius R of curvature is determined so that a round edge fatigue stress determined from a maximum and a minimum total round edge stress obtained by adding up a contact stress induced in the round edge of the innermost thin metal ring in contact with the side surface of the pulley groove, a stress induced in the round edge by a tensile force exerted on the innermost thin metal ring, and a bending stress induced in the round edge of the innermost thin metal ring when the innermost thin metal ring is bent is equal to or smaller than an inner circumference fatigue stress determined from a maximum and a minimum inner circumference total stress obtained by adding up a contact stress induced in a part contiguous with the inner circumference of the innermost thin metal ring in contact with an edge of the block, a stress induced in the part contiguous with the inner circumference of the innermost thin metal ring and a bending stress induced in the part contiguous with the inner circumference of the innermost thin metal ring when the innermost thin metal ring is bent. Thus, the fatigue failure of the round edge of the innermost thin metal ring can be avoided and the life of the innermost thin metal ring can be extended. Further, the induction of a large stress in the edge at the intersection of the outer side surface and the inner circumference of the innermost ring due to contact between the edge and the side surface of the pulley groove can be avoided and the failure of the innermost thin metal ring in a short period of use can be prevented.

Preferably, the radius R of curvature is determined so that a contact part corrected stress difference ($\sigma_{a*HP} = \sigma_{aHP} + \sigma_{mHP}/3$) calculated by adding a round edge stress difference sigma $\sigma_{aHP}$ between a maximum and a minimum total round edge stress obtained by adding up a contact stress induced in the round edge of the innermost thin metal ring in contact with the side surface of the pulley groove, a stress induced in the round edge by a tensile force exerted on the innermost thin metal ring, and a bending stress induced in the round edge of the innermost thin metal ring when the innermost thin metal ring is bent, and 1/3 of a mean round edge stress ($\sigma_{mHP}$) equal to the mean of the maximum and the minimum total round edge stress is equal to or smaller than an inner circumference corrected stress difference ($\sigma_{a*} = \sigma_a + \sigma_m/3$) calculated by adding an inner circumference stress difference ($\sigma a$) between a maximum and a minimum inner circumference total stress obtained by adding up a contact stress induced in a part contiguous with the inner circumference of the innermost thin metal, ring in contact with an edge of the block, a stress induced in the part contiguous with the inner circumference of the innermost thin metal ring and a bending stress induced in the part contiguous with the inner circumference of the innermost thin metal ring when the innermost thin metal ring is bent, and 1/3 of the mean ($\sigma_m/3$) of the maximum and the minimum inner circumference total stress ($\sigma_{a*HP} \leq \sigma_{a*}$). Thus, the failure of the round edge of the innermost thin metal ring that will come into contact with the side surface of the pulley groove due to fatigue stress can be prevented and the durability and reliability of the innermost thin metal ring can be greatly improved.

Here, the radius R is determined so that a contact part corrected stress difference calculated by adding a round edge stress difference between a maximum and a minimum total round edge stress obtained by adding up a contact stress induced in the round edge of the innermost thin metal ring in contact with the side surface of the pulley groove, a stress induced in the round edge by a tensile force exerted on the innermost thin metal ring, and a bending stress induced in the round edge of the innermost thin metal ring when the innermost thin metal ring is bent, and 1/3 of a mean round edge stress equal to the mean of the maximum and the minimum total round edge stress is equal to or smaller than an inner circumference corrected stress difference calculated by adding an inner circumference stress difference between a maximum and a minimum inner circumference total stress obtained by adding up a contact stress induced in the part contiguous with the inner circumference of the innermost thin metal ring in contact with an edge of the block, a stress induced in the part contiguous with the inner circumference of the innermost thin metal ring and a bending stress induced in the part contiguous with the inner circumference of the innermost thin metal ring when the innermost thin metal ring is bent, and 1/3 of the mean of the maximum and the minimum inner circumference total stress. Thus, the failure of the round edge of the inner most thin metal ring that will come into contact with the side surface of the pulley groove due to fatigue stress can be prevented and the durability and reliability of the innermost thin metal ring can be greatly improved. Thus, the height of a point in contact with the side surface of the pulley groove on the round edge of the innermost thin metal ring from the inner circumference of the same changes scarcely even if the angular relation between the inner circumference of the innermost thin metal ring and the side surface of the pulley groove changes. Consequently, change in the contact stress induced in the part of the round edge in contact with the side surface of the pulley groove can be avoided.

Here, an edge at the intersection of the outer side surface and the inner circumference of the innermost thin metal ring among the thin metal rings, that will come into contact with a side of the pulley groove of the drive pulley and a side of the pulley groove of the driven pulley is chamfered in a bevel surface at an angle greater than the groove angle ($\alpha$) of the pulley groove and the bevel surface is merged smoothly into the outer side surface of the innermost thin metal ring by a round edge of a radius R of curvature that comes into contact with the side surface of the pulley groove, and the radius R is determined so that a contact part corrected stress difference calculated by adding a round edge stress difference between a maximum and a minimum total round edge stress obtained by adding up a contact stress induced in the round edge of the innermost thin metal ring in contact with the side surface of the pulley groove, a stress induced in the round edge by a tensile force exerted on the innermost thin metal ring, and a bending stress induced in the round edge of the innermost thin metal ring when the innermost thin metal ring is bent, and 1/3 of a mean round edge stress equal to the mean of the maximum and the minimum total round edge stress is equal to or smaller than an inner circumference corrected stress difference calculated by adding an inner circumference stress difference between a maximum and a minimum inner circumference total stress obtained by adding up a contact stress induced in the part contiguous with the inner circumference of the innermost thin metal ring in contact with an edge of the block, a stress induced in the part contiguous with the inner circumference of the innermost thin metal ring and a bending stress induced in the part contiguous with the inner circumference of the innermost thin metal ring when the innermost thin metal ring is bent, and 1/3 of the mean of the maximum and the minimum inner circumference total stress. Thus, stress that causes the fatigue failure of the round edge of the innermost thin metal ring when the endless metal belt is extended between the drive and the driven pulley can be reduced and the durability of the innermost thin metal ring can be improved because round edge that comes into contact with the side surface of the pulley groove is spaced as far as possible from the inner circumference of the innermost thin metal ring toward the outer circumference of the same.

Further, a side surface of each thin metal ring has a middle flat part, an edge at the intersection of the side surface and the inner circumference of the thin metal ring is rounded in a radially inner round edge of a radius $R_1$ of curvature and an edge at the intersection of the side surface and the outer circumference of the thin metal ring is rounded in a radially outer round edge of a radius $R_2$ of curvature different from the radius $R_1$. When the round edge that comes into contact with the side surface of the pulley groove is formed in the greater one of the radii $R_1$ and $R_2$, the stress induced in the thin metal ring can be reduced, fatigue failure due to contact stress can be avoided and the durability of the thin metal ring can be improved regardless of the distance between a part of the innermost thin metal ring that come into contact with the side surface of the pulley groove and the circumferential of the same regardless of changes in the inclination of the sides of the pulley grooves of the pulleys, and the inclination and shape of the side surface of the thin metal ring.

Preferably, the radius $R_1$ of curvature of the radially inner round edge of the thin metal ring meets a condition: $R_1/t \geq 2/9$, where t is the thickness of the thin metal ring, when the groove angle ($\alpha$) of the pulley groove is in the range of 6° to 11°. Thus, a stress determined by a round edge stress difference between a maximum and a minimum stress induced in the round edge of the innermost thin metal ring when the round edge comes into contact with the side surface of the pulley groove of the drive or the driven pulley, and the mean of the maximum and the minimum can be limited to a value below a stress determined by the stress difference between a maximum and a minimum combined stress obtained by adding a tensile stress induced in the thin metal ring by a tension applied thereto, and a tensile stress and a compressive stress induced in the thin metal ring when the thin metal ring is bent around the drive or the driven pulley, and the mean of the maximum and the minimum combined stress. Consequently, the fatigue failure of the round edge of the innermost thin metal ring can be avoided and the durability of the endless metal belt can be improved.

The radius $R_1$ of curvature of the radially inner round edge of each thin metal ring is greater than the radius $R_2$ of curvature of the radially outer round edge of the same thin metal ring. Thus, the stress induced in the inner side edge of the thin metal ring in which a large stress is liable to be induced can be limited to a level substantially equal to or lower than that of the stress induced in the outer side edge, so that the durability of the endless metal belt can be enhanced.

The respective radii $R_1'$ and $R_2'$ of curvature of the radially inner and the radially outer round edge of the innermost thin metal ring are greater than the respective radii $R_1$ and $R_2$ of curvature of the radially inner and the radially outer round edge of the thin metal rings other than the innermost thin metal ring, respectively. Thus, the stresses induced in the inner and the outer round edges of the innermost thin metal ring can be limited to levels equal to or below those of the stresses induced in the inner and the outer round edges of the other thin metal rings, so that the fatigue failure of the inner and the outer round edge of the innermost thin metal ring that occurs before that of the other thin metal rings can be prevented and the durability of the endless metal belt can be improved.

BRIEF DESCRIPTION OF THE DRAWINGS

The above and other objects, features and advantages of the present invention will become more apparent from the following description taken in connection with the accompanying drawings, in which:

Fig. 1 is a diagrammatic view of a metal belt type nonstep variable-speed transmission provided with an endless metal belt including thin metal rings in a preferred embodiment according to the present invention;

Fig. 2 is a schematic side elevation of a wrapping connector driving mechanism shown in Fig. lp

Fig. 3 is a fragmentary perspective view of an endless metal belt included in the wrapping connector driving mechanism shown in Fig. 2;

Fig. 4 is a front elevation of a metal block;

Fig. 5 is a longitudinal sectional view taken on line V-V in Fig. 4;

Fig. 6 is a longitudinal sectional view taken on line VI-VI in Fig. 4;

Fig. 7 is a diagrammatic view of assistance in explaining tensile force that acts on an innermost thin metal ring included in the endless metal belt shown in Fig. 3;

Fig. 8 is a graph of assistance in explaining the relation between tensile forces and friction coefficients;

Fig. 9 is graph showing the distribution of internal stress in a middle part with respect to thickness of the innermost thin metal ring;

Fig. 10 is graph showing the distribution of internal stress in the outer circumference of the innermost thin metal ring;

Fig. 11 is diagram showing the distribution of internal stress in the outer circumference of the innermost thin metal ruing;

Fig. 12 is a fragmentary longitudinal sectional view of the endless metal belt;

Fig. 13 is an enlarged, fragmentary, cross-sectional view of the endless metal belt;

Fig. 14 is an enlarged, fragmentary, cross-sectional view of a part of Fig. 13;

Fig. 15 is a diagram showing the distribution of contact stress in a state where the inner side edge of the innermost thin metal ring is in contact with the side surface of a ring groove;

Fig. 16 is a graph showing the corrected stress differences relating to the interior and an end of the innermost thin metal ring;

Fig. 17 is an enlarged, fragmentary, cross-sectional view of the innermost thin metal ring included in thin metal rings in a second embodiment according to the present invention;

Fig. 18 is an enlarged, fragmentary, cross-sectional view of the innermost thin metal ring included in thin metal rings in a third embodiment according to the present invention;

Fig. 19 is a table tabulating stresses that are induced in the innermost thin metal ring;

Fig. 20 is a table tabulating stresses that are induced in the innermost thin metal ring; and

Fig. 21 is a graph showing the relation between the height of the round edge $(30_{1d})$ from the inner circumference $(30_a)$ of the innermost thin metal ring and the radius (R) of curvature of the round edge $(30_{1d})$ for determining the radius R of curvature of the round edge that come into contact with the side surface of the pulley groove for the height h to make corrected internal stress difference $(\sigma_{a*})$ and contact part corrected stress difference $(\sigma_{a*HP})$ are equal.

DESCRIPTION OF THE PREFERRED EMBODIMENT

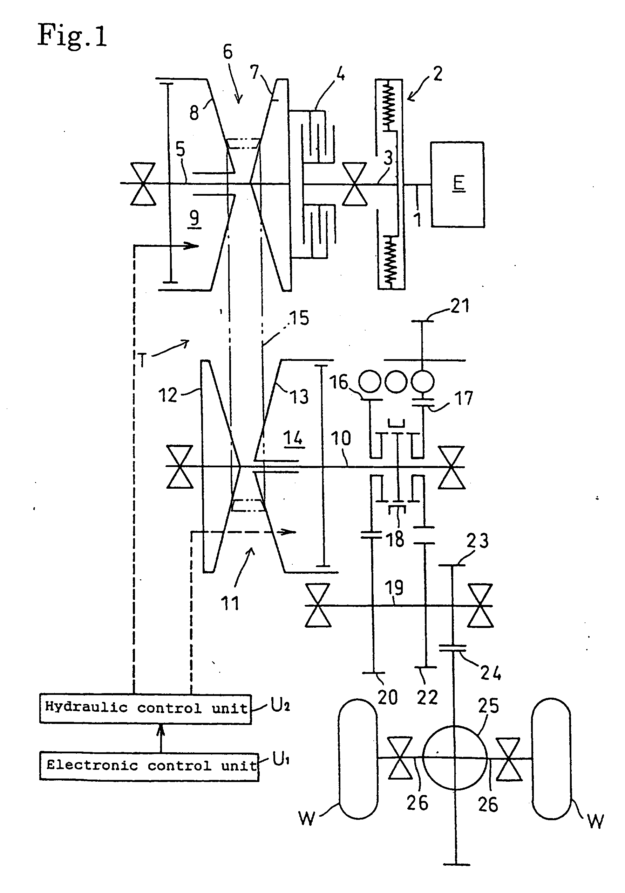

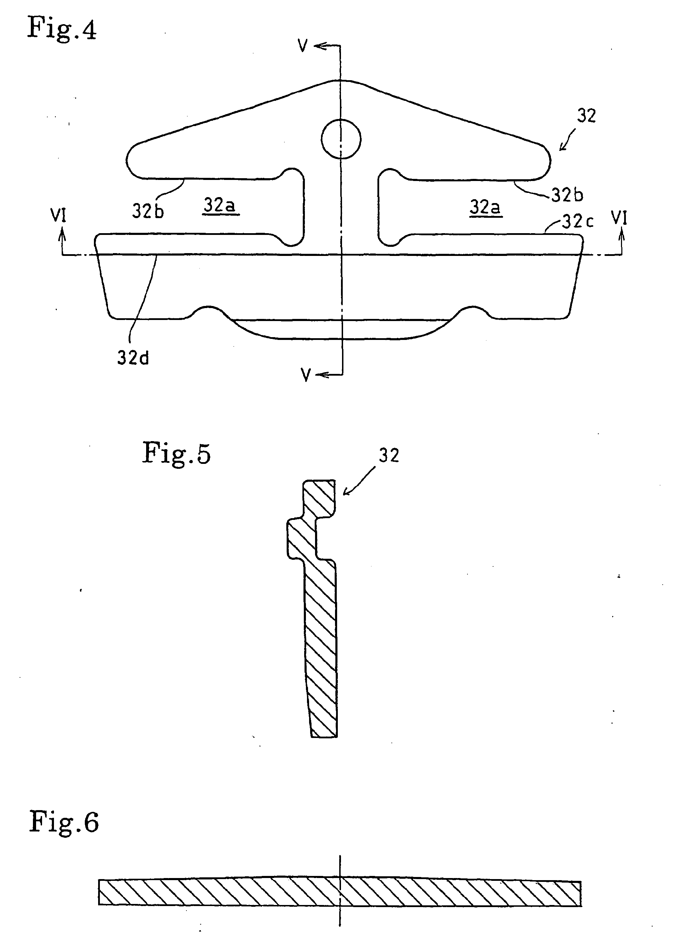

A thin metal ring in a first embodiment according to the present invention will be described with reference to Figs. 1 to 6. Referring to Fig. 1, an input shaft 3 is connected through a damper 2 to an internal combustion engine E. The input shaft is connected through a starter clutch 4 to a drive shaft 5 included in a metal belt type nonstep variable-speed transmission T. A drive pulley 6 mounted on the drive shaft 5 has a stationary part 7 formed integrally with the drive shaft 5 and a movable part 8 mounted on the drive shaft 5 so as to be movable toward and away from the stationary part 7. The movable part 8 is biased toward the fixed part 7 by fluid pressure applied to an oil chamber 9. A driven shaft 10 is supported in parallel to the drive shaft 5 and a driven pulley 11 is mounted on the driven shaft 10. The driven pulley 11 has a stationary part 12 formed integrally with the driven shaft 10 and a movable part 13 mounted on the driven shaft 10 so as to be movable toward and away from the stationary part 12. The movable part 13 is biased toward the stationary part 12 by fluid pressure applied to an oil chamber 14.

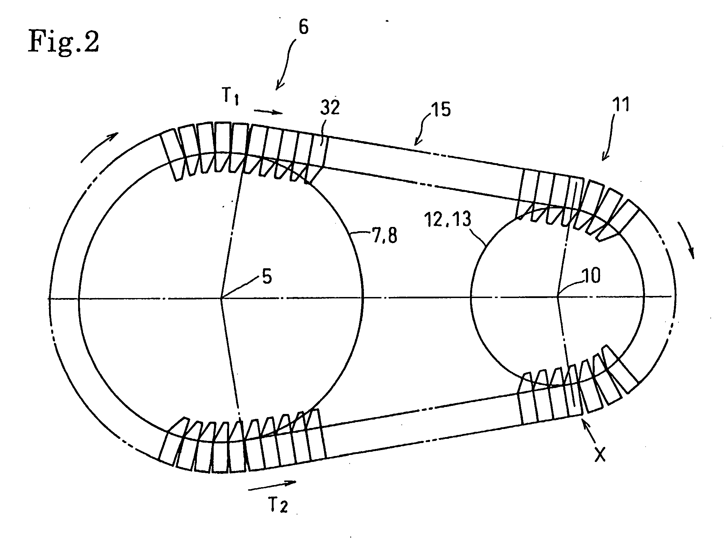

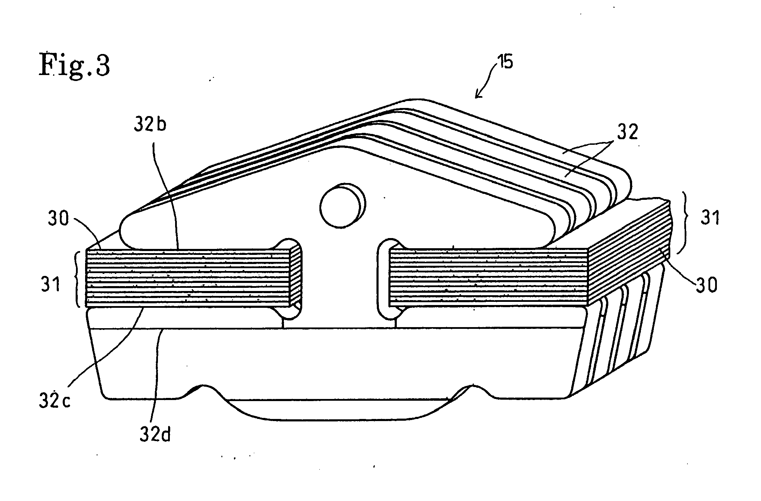

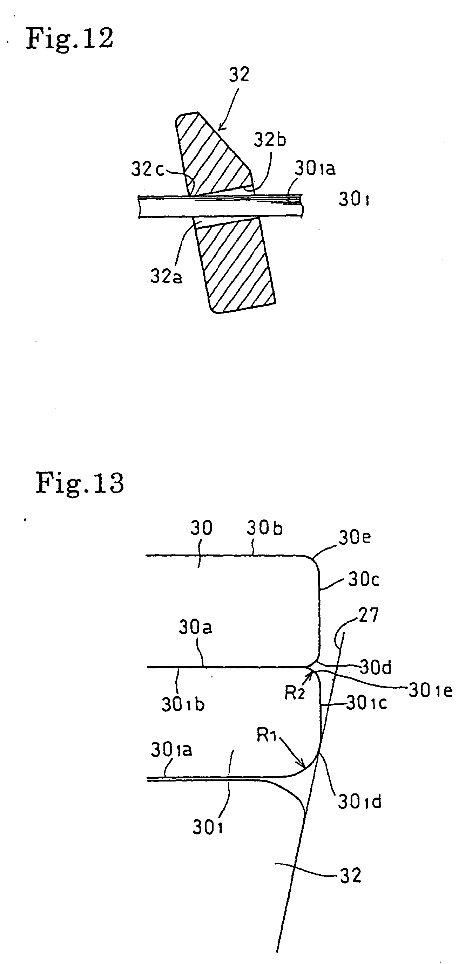

Referring to Figs. 2 and 3, an endless metal belt 15 is formed by inserting a pair of layered ring structures 31 in slots 32a formed in opposite side parts of metal blocks 32. The endless metal belt 15 is extended between the drive pulley 6 and the driven pulley 11. Each layered ring structure 31 is formed by closely superposing twelve thin metal rings 30 of about 660 mm in circumference, abut 9.2 mm in width and about 0.18 mm in thickness. As shown in Fig. 13, the inner side edges at the intersections of the opposite side surfaces 30c and the inner circumference 30a of each thin metal ring 30 are ground in inner round edges 30d of a shape substantially resembling a quarter of a circular cylinder, and the outer side edges at the intersections of the opposite side surfaces 30c and the outer circumference 30b of each thin metal ring 30 are ground in outer round edges 30e of a shape substantially resembling a quarter of a circular cylinder. The radius $R_1$ of curvature of the inner round edge $30_1$d of the innermost thin metal ring $30_1$ is greater than the radius $R_2$ of curvature of the outer round edge $30_1$e of the same.

A forward drive gear 16 and a reverse drive gear 17 are mounted on the driven shaft 10 so as to be rotatable relative to each other. The forward drive gear 16 and the reverse drive gear 17 are engaged with and disengaged from the driven shaft 10 selectively by a selector 18. An output shaft 19 is extended in parallel to the driven shaft 10. A forward driven shaft 20 and a reverse driven gear 22 are formed integrally with the output shaft 19. The output shaft 19 is driven for forward rotation through the forward driven gear 20 by the forward drive gear 16. The output shaft 19 is driven for reverse rotation through a reverse idle gear 21 and the reverse driven gear 22 by the reverse drive gear 17. A final drive gear 23 is formed integrally with the output shaft 19, and a final driven gear 24 engaged with the final drive gear 23 is combined with a differential gear 25. The differential gear 25 is connected to right and left wheels W by right and left axles 26. The driving force of the output shaft 19 is transmitted differentially through the final drive gear 23, the final driven gear 24, the differential gear 25 and the axles 26 to the right and the left wheel W.

The respective oil chambers 9 and 14 of the movable parts 8 and 13 are connected to a hydraulic control unit $U_2$ controlled by an electronic control unit $U_1$. When setting the metal belt type nonstep variable-speed transmission T to LOW, the electronic control unit $U_1$ gives a control signal to the hydraulic control unit $U_2$ to increase the fluid pressure in the oil chamber 14 of the driven pulley 11 and to decrease the fluid pressure in the oil chamber 9 of the drive pulley 6. Consequently, the effective diameter $D_{DN}$ of the driven pulley 11 increases continuously and the effective diameter $D_{DR}$ decreases continuously, so that the speed change ratio of the metal belt type nonstep variable-speed transmission T varies continuously to LOW. When setting the metal belt type nonstep variable-speed transmission T to OD, the electronic control unit $U_1$ gives a control signal to the hydraulic control unit $U_2$ to decrease the fluid pressure in the oil chamber 14 of the driven pulley 11 and to increase the fluid pressure in the oil chamber 9 of the drive pulley 6. Consequently, the effective diameter $D_{DN}$ of the driven pulley 11 decreases continuously and the effective diameter $D_{DR}$ increases continuously, so that the speed change ratio of the metal belt type nonstep variable-speed transmission T varies continuously to OD.

Stresses that will be induced in the thin metal ring 30 will be explained. When the layered ring structures 31 are extended between the drive pulley 6 and the driven pulley 11 and the drive pulley 6 is driven for clockwise rotation as shown in Fig. 2, a tensile stress $T_1$ is induced in one straight side of each layered ring structure 31 extending between the drive pulley 6 and the driven pulley 11 and a tensile stress $T_2$ is induced in the other straight side of the layered ring structure 31. The tensile stresses $T_1$ and $T_2$ are measured by a method mentioned in JP-A No. Hei 10-89429.

When the endless metal belt 15 formed by inserting the pair of layered ring structures 31 in the slots 32a of the metal blocks 32 is extended between the drive pulley 6 and the driven pulley 11, a tensile force difference $\Delta T_1$ acts on the innermost thin metal ring $30_1$.

$$\Delta T_1 = \{n(\xi - 1) + 1\}\Delta T_{all}/n\xi$$

where $\Delta T_{all} = (T_1 - T_2) / 2$, $\xi$ is friction coefficient ratio $(\mu_{SSM}/\mu_{SS})$, $\mu_{SSM}$ is the friction coefficient between the metal block 32 and the thin metal ring 30, $\mu_{SS}$ is the friction coefficient between the thin metal rings 30 and n is the number of the layered thin meal rings 30.

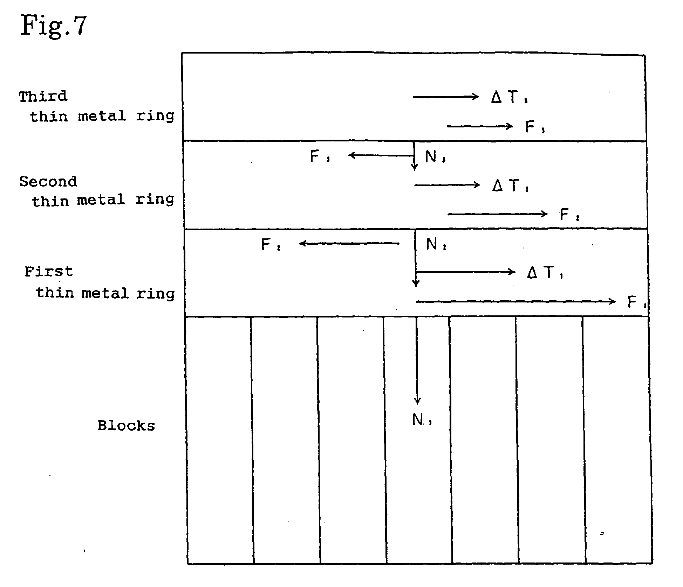

Referring to Fig. 7 showing a simple model of an endless metal belt having three thin metal rings, tensile force differences $\Delta T$ that contribute to tension change are:

$$\Delta T_3 = F_3 = \mu_{SS}N$$

$$\Delta T_2 = F_2 - F_3 = \mu_{SS}N$$

$$\Delta T_1 = F_1 - F_2 = 3\mu_{SSM}N - 2\mu_{SS}N$$

Thus, $\Delta T_1$ is different from $\Delta T_2$ and $\Delta T_3$.

$$\Delta T_1 / \Delta T_2 = (3\mu_{SSM}N - 2\mu_{SS}N)/\mu_{SS}N = (3\mu_{SSM} - 2\mu_{SS})/\mu_{SS}$$

Therefore, when the number of the thin metal rings is n,

$$\Delta T_1 / \Delta T_2 = \{n\mu_{SSM}N - (n - 1)\mu_{SS}N\}/\mu_{SS}N = \{n\mu_{SSM} - (n - 1)\mu_{SS}\}/\mu_{SS}$$

$$= n\xi - (n - 1) = n(\xi - 1) + 1 \quad \ldots\ldots\ldots (1)$$

The tensile force difference $\Delta T_{all}$ in the entire layered ring structure 31 is:

$$\Delta T_{all} = \Delta T_1 + \Delta T_2 + \ldots + \Delta T_n = (n - 1)\Delta T_2 + \Delta T_1$$

$$= (n - 1)\Delta T_2 + \{n(\xi - 1) + 1\}\Delta T_2 = n\xi\Delta T_2$$

Therefore,

$$\Delta T_2 = 1/n\xi\Delta T_{all} \quad \ldots\ldots\ldots (2)$$

By substituting Expression (2) into Expression (1),

$$\Delta T_1 = \{n(\xi - 1) + 1\}/n\xi\Delta T_{all} \quad \ldots\ldots\ldots (3)$$

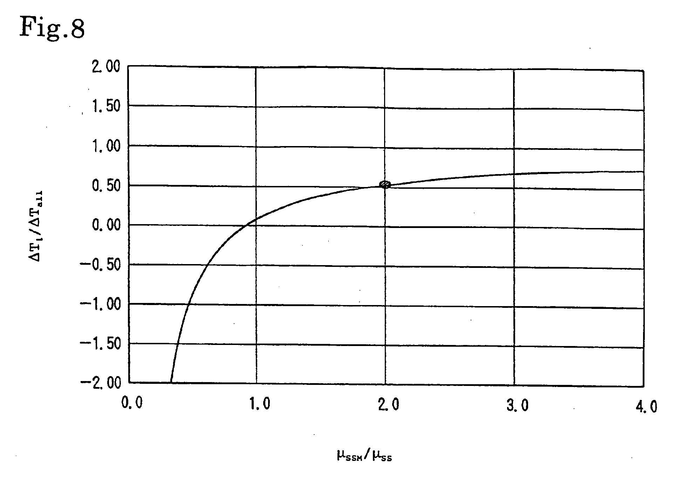

Fig. 8 shows the relation between $\Delta T_1/\Delta T_{all}$ and $\mu_{SSM}/\mu_{SS}$ when n = 12 calculated by using Expression (3)

The friction coefficient $\mu_{SSM}$ between the metal blocks 32 and the thin metal ring 30 and the friction coefficient $\mu_{SS}$ between the thin metal rings 30 determined through experiments were about 0.1 and about 0.05, respectively. Thus, $\mu_{SSM}/t\mu_{SS} = \xi = 2.0$.

The value of $\Delta T_1$ was calculated by using these values and Expression (3).

$$\Delta T_1 / \Delta T_{all} = (12 + 1)/12 \times 2 = 13/24 \approx 0.54$$

From Fig. 8,

$$\Delta T_1 / \Delta T_{all} \approx 0.5$$

Thus, about 50% of the tensile force difference $\Delta T_{all}$ in the one layered ring structure 31 acts on the innermost thin metal ring $30_1$. The mean tensile force $T_1 + T_2$ in the innermost thin metal ring $30_1$ is determined. From the mean tensile force difference $T_1 - T_2$ and the mean tensile force $T_1 + T_2$, the maximum tensile stress $\sigma_{TH} = T_1/2 \times 12 \times A \times t$ in the innermost thin metal ring $30_1$ moving from the drive pulley 6 toward the driven pulley 11 and the minimum tensile stress $\sigma_{TL} = T_2/2 \times 12 \times A \times t$ in the innermost thin metal ring $30_1$ moving from the driven pulley 11 toward the drive pulley 6, where A is the width and t is the thickness of the thin metal ring 30, are determined.

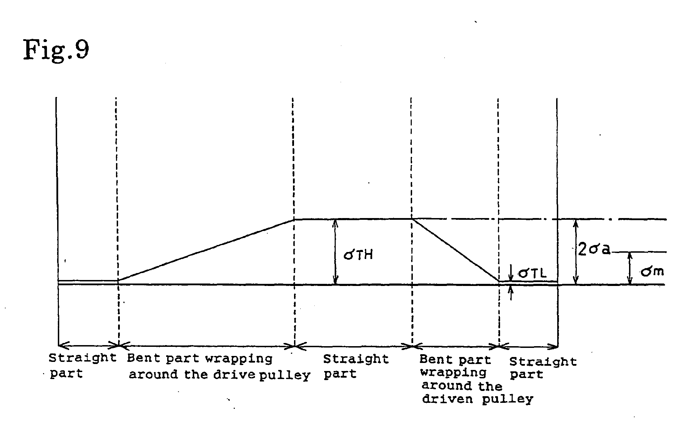

Fig. 9 is graph showing the distribution of tensile stress $\sigma_T$ in a middle part with respect to thickness of the innermost thin metal ring $30_1$, in which the length of the innermost thin metal ring $30_1$ is measured on the horizontal axis and the stress in the middle part of the innermost thin metal ring $30_1$ is measured on the vertical axis (tensile stress and compressive stress are measured upward and downward from the horizontal axis, respectively). In the graph shown in Fig. 9, the difference between the maximum and the minimum stress is $2\sigma_a$, where $\sigma_a$ is stress difference, and the mean of the maximum and the minimum stress is the mean stress $\sigma_m$.

The thin metal rings 30 are in a circle of a radius $R_0$ when the same are not extended between the drive pulley 6 and the driven pulley 11 and are in an unloaded state. When the thin metal rings 30 are extended between the drive pulley 6 and the driven pulley 11, parts of the innermost thin meal ring $30_1$ wound around the drive pulley 6 and the driven pulley 11 are curved in arcs of circles of radii $R_{RD}$ and $R_{DN}$, respectively, and parts of the innermost thin metal ring $30_1$ extending between the drive pulley 6 and the driven pulley 11 are stretched straight. Consequently, bending stresses $\sigma_{VDR} = Et\{(1/R_{DR}) - (1/R_0)$ and $\sigma_{VDN} = Et\{(1/R_{DN}) - (1/R_0) \}$ (plus sign indicates tensile stress and minus sign indicates compressive stress) are induced in a part contiguous with the outer circumference of the innermost thin metal belt $30_1$ wound around the drive pulley 6 and a part contiguous with the inner circumference of the innermost thin metal ring $30_1$ wound around the driven pulley 11, respectively. A bending stress $\sigma_{V1} = Et(1/R_0)$ is induced in a part contiguous with the outer circumference of the innermost thin metal ring $30_1$ extending between the drive pulley 6 and the driven pulley 11.

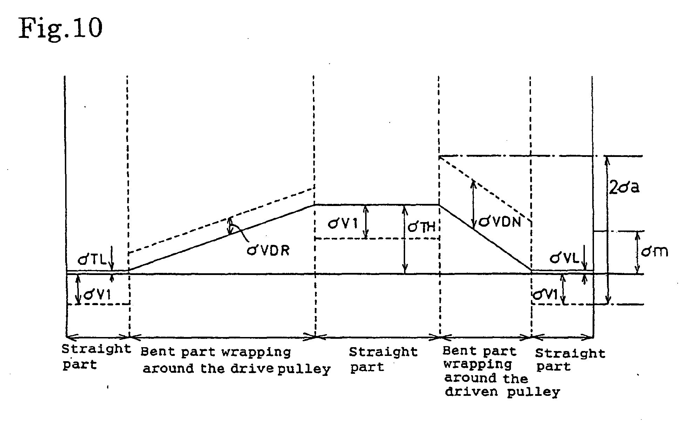

Fig. 10 shows the variation of the stress induced in the part contiguous with the outer circumference of the innermost thin metal ring $30_1$ along the length of the innermost thin metal ring $30_1$. In the graph shown in Fig. 10, dotted lines indicates the sum of addition of $\sigma_T$ and $\sigma_{VDR}$ in the part wound around the drive pulley 6, the sum of addition of $\sigma_T$ and $\sigma_{VDN}$ in the part wound around the driven pulley 11, the remainder of subtraction of $\sigma_{V1}$ from $\sigma_m$ in the straight part, and the remainder of subtraction of $\sigma_{V1}$ from $\sigma_{TL}$ in the straight part, respectively.

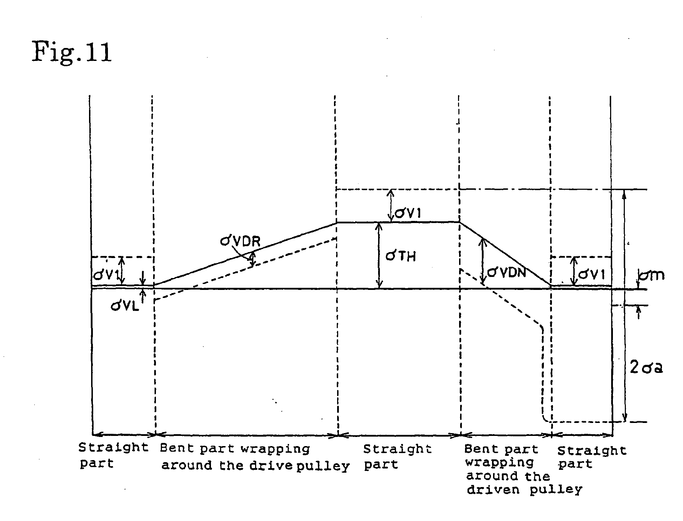

Fig. 11 shows the variation of the stress induced in the part contiguous with the inner circumference of the innermost thin metal ring $30_1$ along the length of the innermost thin metal ring $30_1$. In the graph shown in Fig. 11, dotted lines indicates the remainder of subtraction of $\sigma_{VDR}$ (compressive stress) from $\sigma_T$ in the part wound around the drive pulley 6, the remainder of subtraction of $\sigma_{VDN}$ (compressive stress) from $\sigma_T$ in the part wound around the driven pulley 11, the sum of addition of $\sigma_{V1}$ and $\sigma_{TH}$ in the straight part, and the sum of addition of $\sigma_{V1}$ and $\sigma_{TL}$ in the straight part, respectively.

As shown in Fig. 11, the stress $\sigma_{VDN}$ in a part X (Fig. 2) of the innermost thin metal ring $30_1$ leaving the driven pulley 11 drops sharply because the rear edge 32c of the inner side surface 32b of the slot 32a of the metal block 32 bites the inner circumference $30_{1a}$ of the innermost thin metal ring $30_1$ as shown in Fig. 12 and a large, local contact stress is induced.

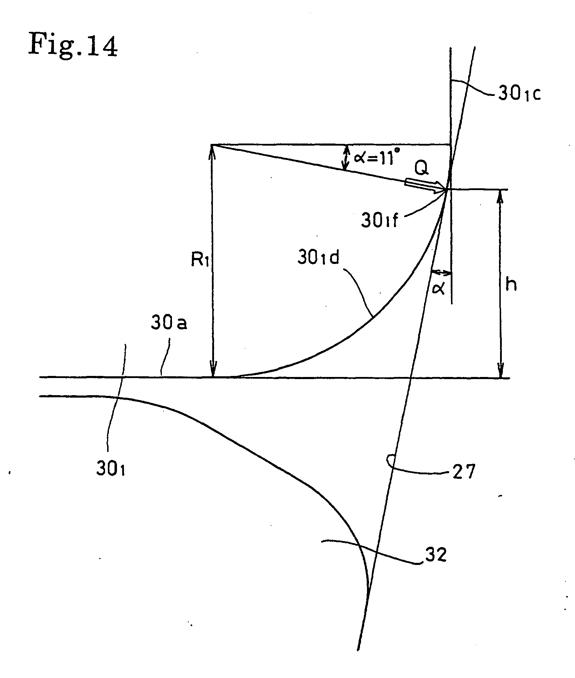

A description will be made of contact stress that will be induced in a contact part $30_{1f}$ of the inner round edge $30_{1d}$ when the inner round edge $30_{1d}$ comes into contact with a side surface 27 of the pulley groove. When the inner round edge $30_{1d}$ having a radius $R_1$ of curvature of the innermost thin metal ring $30_1$ comes into contact with the side surface 27 of the pulley groove as shown in Fig. 14 , the contact part $30_{1f}$ is in contact with the side surface 27 of the pulley groove 27 at a distance: $h = R_1(1 - \sin \alpha)$ from the inner circumference $30_1$. A contact stress induced in a part around the contact part $30_{1f}$ is expressed by the following expression called Hertz formula.

$$\sigma_{HP} = [Q/\pi \cdot 1 \cdot R_1\{(1 - V_1^2)/E_1 + (1 - V_2^2)\}/E_2]^{1/2} \quad \ldots \quad (4)$$

where $V_1$ is the Poisson ratio of the thin metal ring 30, $V_2$ is the Poisson ratio of the drive pulley 6 and the driven pulley 11, and $E_1$ and $E_2$ are elastic moduli of the thin metal ring 30, and the pulleys 6 and 11. Supposing $V_1 = V_2 = 0.3$ and $E_1 = E_2$,

$$\sigma_{HP} = \{Q \cdot E/2 \cdot \pi \cdot 1 \cdot R_1(1 - V_2^2)]^{1/2} \quad \ldots \ldots \ldots (5)$$

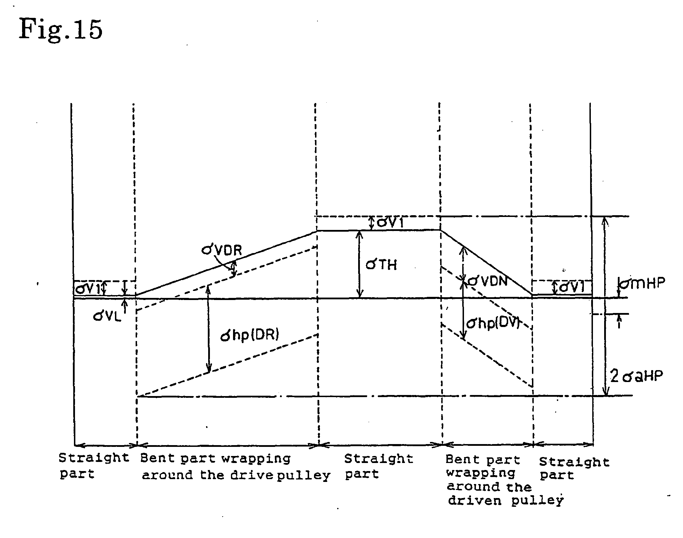

Fig. 11 shows the variation of the stress induced in the part contiguous with the inner circumference $30_{1a}$ of the innermost thin metal ring $30_1$ along the length of the innermost thin metal ring $30_1$. Fig. 15 shows the variation of the stress induced in a part of the innermost thin metal ring $30_1$ at a distance h from the inner circumference $30_{1a}$ toward the outer circumference $30_{1b}$ along the length of the innermost thin metal ring $30_1$.

Generally, the fatigue strength of a metal is related with the stress difference $\sigma_a$ between a maximum stress and a minimum stress, and the mean stress $\sigma_m$. The fatigue strength of a steel is dependent on corrected internal stress difference $\sigma_{a*}$ expressed by:

$$\sigma_{a*} = \sigma_a + \sigma_m/3 \qquad \cdots\cdots\cdots (6)$$

Corrected contact stress difference $\sigma_{a*HP}$ in the contact part of the inner round edge $30_{1d}$ of the innermost thin metal ring $30_1$ in contact with the side surface 27 of the pulley groove is expressed by:

$$\sigma_{a*HP} = \sigma_{aHP} + \sigma_{mHP}/3 \qquad \cdots\cdots\cdots (7)$$

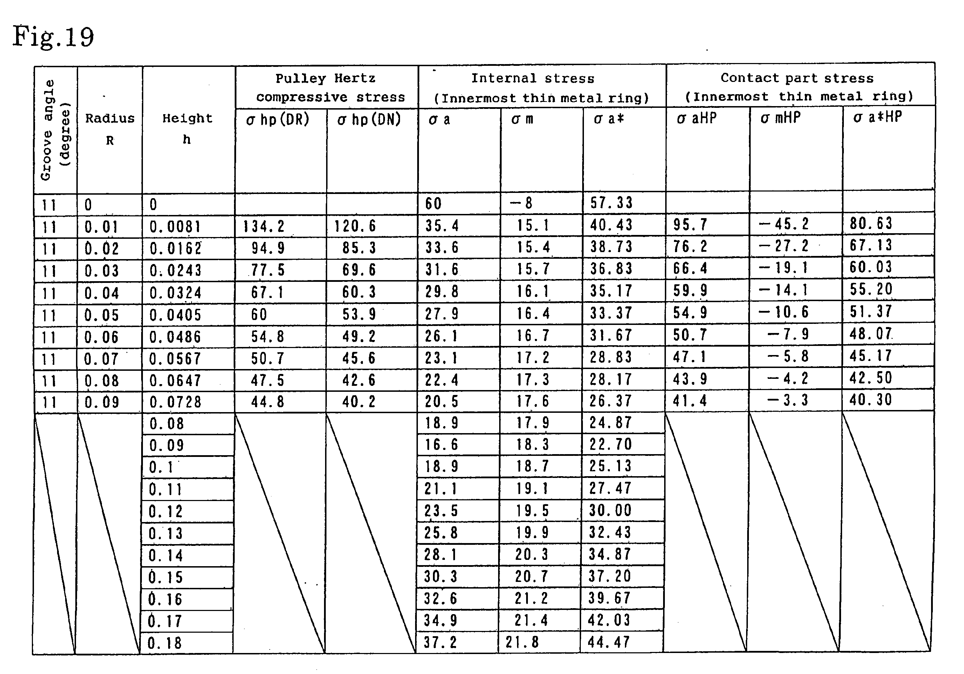

Table 1 shown in Fig. 19 calculated values of the corrected internal stress difference $\sigma_{a*}$ and contact part corrected stress difference $\sigma_{a*HP}$. In Table 1, values for the radius $R_1$ of curvature of the inner round edge $30_{1d}$ of the innermost thin metal ring $30_1$ are 0.01, 0.02, 0.03, 0.04, 0.05, 0.06, 0.07, 0.08 and 0.09 mm, and the height h of the contact part in contact with the side surface 27 of the pulley groove from the inner circumference of the innermost thin metal ring $30_1$ is calculated by using: $h = R_1(1 - \sin\sigma)$. Pulley Hertz compressive stresses $\sigma_{hP(DR)}$ and $\sigma_{hp(DN)}$ at the height h are calculated by using Expression (5). Internal stresses (the stress difference $\sigma_a$, the mean stress $\sigma_m$ and the corrected stress difference $\sigma_{a*}$) in a part at the height h in the innermost thin metal ring $30_1$ are determined by methods similar to those mentioned above.

The internal stresses in the innermost thin metal ring $30_1$ and the pulley Hertz compressive stresses are combined to determine pulley contact stresses (the pulley contact stress difference $\sigma_{aHP}$, the mean pulley contact stress $\sigma_{mHP}$ and the contact part corrected stress difference $\sigma_{a*HP}$) in the contact part of the innermost thin metal ring $30_1$ in contact with the side surface 27 of the pulley groove as shown in Fig. 15.

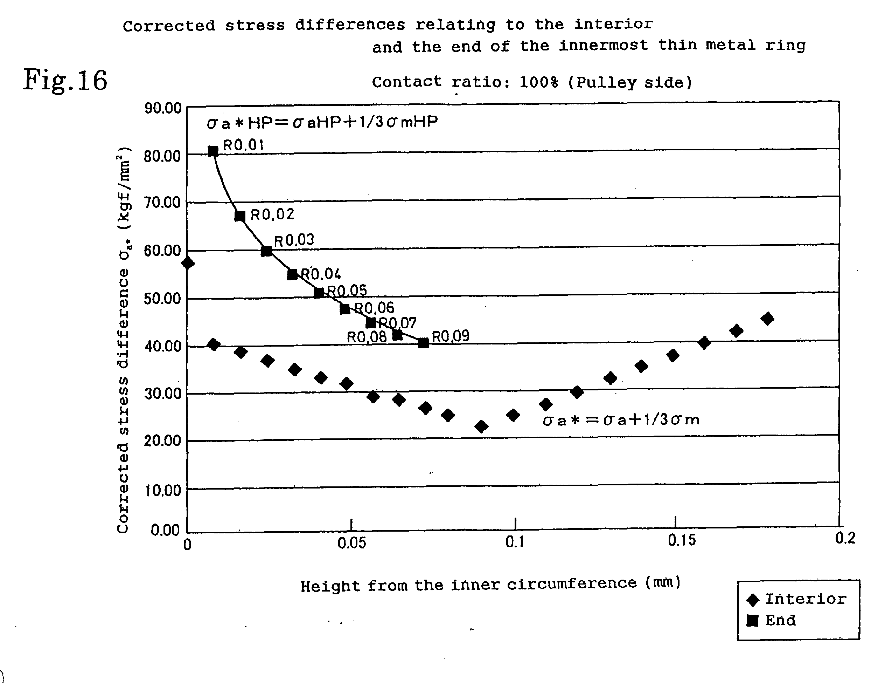

Fig. 16 shows values of the corrected internal stress difference $\sigma_{a*}$ and the contact part corrected stress difference $\sigma_{a*HP}$ for different values of the height h, in which the corrected internal stress difference $\sigma_{a*}$ and the contact part corrected stress difference $\sigma_{a*HP}$ are measured on the vertical axis and the height h is measured on the horizontal axis. As obvious from Fig. 16, the contact part corrected stress difference $\sigma_{a*HP}$ is greater than the corrected internal stress difference $\sigma_{a*}$ in the part contiguous with the inner circumference $30_{1a}$ in which the corrected internal stress difference $\sigma_{a*}$ is the greatest when the radius $R_1$ of curvature of the inner round edge $30_{1d}$ is one of 0.01, 0.02 and 0.03 mm. When the radius $R_1$ is 0.04 mm or above, the contact part corrected stress difference $\sigma_{a*HP}$ is smaller than the corrected internal stress difference $\sigma_{a*}$ in the part contiguous with the inner circumference $30_{1a}$. The fatigue failure of the innermost thin metal ring 301 that starts from the inner round edge $30_{1d}$ of the innermost thin metal ring $30_1$ that comes into contact with the side surface 27 of the pulley groove can be prevented by forming the inner round edge $30_{1d}$ of the innermost thin metal ring $30_1$ in a radius R of curvature of 0.04 mm or above.

The aforesaid values are calculated on an assumption that the inner round edge $30_{1d}$ of a part of the innermost thin metal ring $30_1$ wound round the pulley is entirely in contact with the side surface 27 of the pulley groove. However, if the inner round edge $30_{1d}$ of a part of the innermost thin metal ring $30_1$ wound round the pulley is in local contact with the side surface 27 of the pulley groove, the contact part corrected stress difference $\sigma_{a*HP}$ increases. Therefore, if the radius $R_1$ of curvature of the inner round edge $30_{1d}$ is 0.03 or below, the fatigue failure of the inner round edge $30_{1d}$ of the innermost thin metal ring $30_1$ is liable to start earlier than that of the inner circumference $30_{1a}$ of the same.

Thus, in this embodiment, the start of fatigue failure from the inner round edge $30_{1d}$ of the innermost thin metal ring $30_1$ can be avoided when the radius $R_1$ of curvature of the inner round edge $30_{1a}$ of the innermost thin metal ring $30_1$ is 0.04 mm or above and the ratio $R_1/t = 2/9$.

The radius $R_2$ of curvature of the outer round edge $30_{1e}$ of the innermost thin metal ring $30_1$ is smaller than the radius $R_1$ of curvature of the inner round edge $30_{1d}$ of the same as shown in Fig. 13. Therefore, time necessary for finishing the outer round edge $30_{1e}$ of the innermost thin metal ring $30_1$ by grinding can be reduced and the innermost thin metal ring $30_1$ can be easily fabricated.

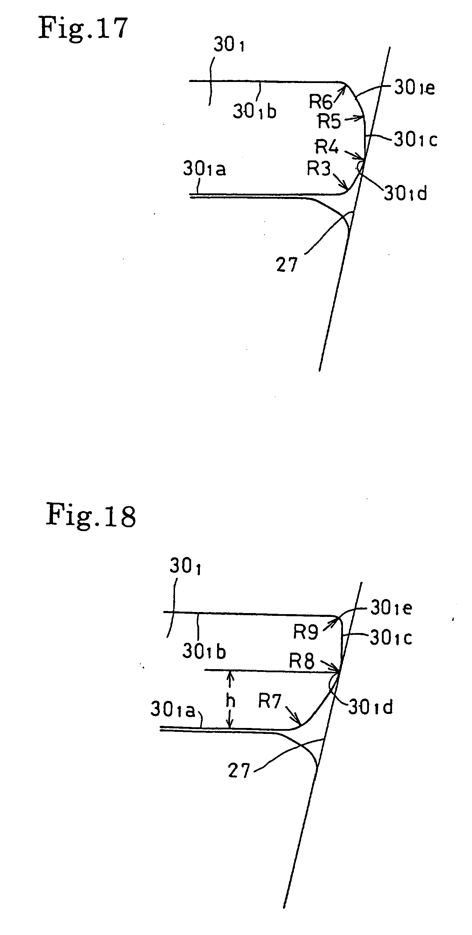

In this embodiment, the radially inner and the radially outer edge of the thin metal ring 30, particularly, the innermost thin metal ring $30_1$, are mechanically ground to form the inner and the outer round edge. As shown in Fig. 17, the radially inner and the radially outer edge of the thin metal ring 30 may be chamfered in bevel surfaces and the bevel surfaces may be finished by barrel finishing so that apart of the bevel surface that will come into contact with the side surface 27 of the pulley groove is rounded in a round edge of a radius $R_4$ of about 0.04 mm. The thin metal ring 30 thus finished by barrel finishing has a fatigue strength similar to that of the innermost thin metal ring $30_1$ in the aforesaid embodiment. Since the radially inner and the radially outer edge of the thin metal ring 30 are chamfered, time for barrel finishing can be greatly reduced.

Since the radially inner and the radially outer edge of the thin metal ring 30 are chamfered, the height h of the part of the round edge that will come into contact with the side surface 27 of the pulley groove from the inner circumference can be easily increased. Therefore, the radius $R_4$ of curvature of the part that will come into contact with the side surface 27 of the pulley groove may be smaller than the radius $R_1$, so that time for barrel finishing can be further reduced.

Only the edge at the intersection of the inner circumference $30_{1a}$ and the side surface $30_{1c}$ of the innermost thin metal ring $30_1$ may be chambered in a large bevel surface as shown in Fig. 18 to increase the height h of the round edge 301d that will come into contact with the side surface 27 of the pulley groove from the inner circumference $30_{1a}$, which is effective in further extending the fatigue life of the round edge $30_{1d}$.

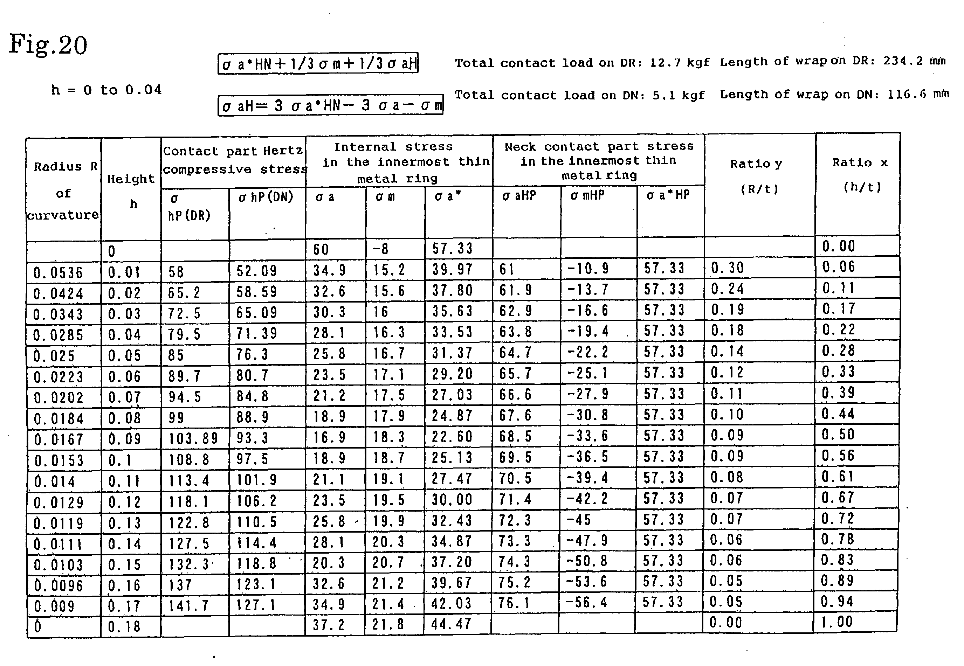

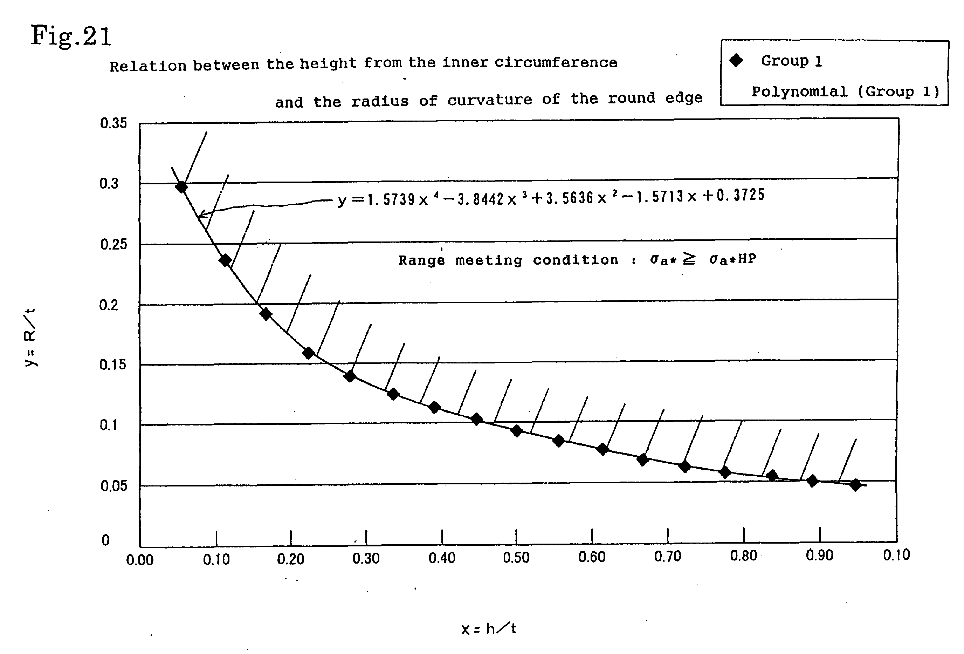

Table 2 shown in Fig. 20 tabulates values of the corrected internal stress difference $\sigma_{a*}$ and the contact part corrected stress difference $\sigma_{a*HP}$ in the innermost thin metal ring $30_1$ for different values of the height h. Fig. 21 is a graph for determining the radius R of curvature of the round edge that come into contact with the side surface 27 of the pulley groove for the height h to make $\sigma_{a*HP} = \sigma_{a*}$. When the height h of the contact part, i.e., the round edge $30_{1d}$, from the inner circumference $30_{1a}$ is increased, the radius R of curvature of the round edge $30_{1d}$ may be reduced, which simplifies a process for forming the round edge $30_{1d}$ and reduces the contact part corrected difference $\sigma_{a*HP}$ in the contact part, i.e., the round edge $30_{1d}$.

Although the invention has been described in its preferred embodiments with a certain degree of particularity, obviously many changes and variations are possible therein. It is therefore to be understood that the present invention may be practiced otherwise than as specifically described herein without departing from the scope thereof.

Thin metal rings for a nonstep variable-speed transmission including a drive pulley and a driven pulley having variable effective diameters to change speed change ratio. The thin metal rings are layered to form layered ring structures, a plurality of blocks are arranged along and supported on the layered ring structures to form an endless metal belt, and the endless metal belt is extended between the drive and the driven pulley. A radially inner edge at the intersection of the outer side surface and the inner circumference of the innermost thin metal ring among the thin metal rings is rounded in a round edge of a radius R of curvature. The radius R of curvature is determined so that a maximum total round edge stress obtained by adding up a contact stress induced in the round edge of the innermost thin metal ring in contact with the side surface of the pulley groove, a stress induced in the round edge by a tensile force exerted on the innermost thin metal ring, and a bending stress induced in the round edge of the innermost thin metal ring when the innermost thin metal ring is bent is equal to or smaller than a maximum inner circumference total stress obtained by adding up a contact stress induced in a part contiguous with the inner circumference of the innermost thin metal ring in contact with an edge of the block, a stress induced in the part contiguous with the inner circumference of the innermost thin metal ring and a bending stress induced in the part contiguous with the inner circumference of the innermost thin metal ring.

## Claims

1. A continuously variable transmission having a drive pulley (6), a driven pulley (11), and an endless metal belt (15) extended between the drive pulley (6) and the driven pulley (11) to transmit driving force from the drive pulley (6) to the driven pulley (11), respectively effective diameters of the drive pulley (6) and the driven pulley (11) being continuously variable to change the speed change ratio, wherein the endless metal belt (15) is made up of thin metal rings (30) layered to form layered ring structures (31), and a plurality of blocks (32) arranged along and supported on the layered ring structures (31) to form the endless metal belt (15),
   wherein each of the thin metal rings (30, $30_1$) has a radially inner edge (30d, $30_1$d) at the intersection of a side surface (30c, $30_1$c) and a radially inner circumferential surface (30a, $30_1$a) thereof, and a radially outer edge (30e, $30_1$e) at the intersection of the side surface (30c) and a radially outer circumferential surface (30b) thereof, wherein the side surface (30c, $30_{1c}$) of each thin metal ring (30, $30_1$) has a middle flat part, and wherein the thin metal rings (30) include an innermost thin metal ring ($30_1$) having a radially inner edge ($30_1$d) in contact with side surfaces (27) of the drive pulley (6) and the driven pulley (11);
   **characterized in that**:

      the radially inner edge (30d, $30_1$d) and the radially outer edge (30e, $30_1$e) of the thin metal rings (30, $30_1$) are rounded with different radii of curvature; and
      the radii ($R_1$, $R_2$) of curvature on the radially inner and radially outer edges ($30_1$d, $30_1$e) of the innermost thin metal ring ($30_1$) are greater than the radii of curvature of the radially inner and outer edges (30d, 30e) of the thin metal rings (30) other than the innermost thin metal ring ($30_1$), respectively.

2. The continuously variable transmission according to claim 1, wherein the radius ($R_1$) of curvature of the radially inner round edge ($30_1$d) of the innermost thin metal ring ($30_1$) is 0.04 mm or above.

3. The continuously variable transmission according to claim 1 or 2, wherein a ratio ($R_1$/t) of the radius ($R_1$) of curvature of the radially inner round edge ($30_1$d) of the innermost thin metal ring ($30_1$) and the thickness (t) of the innermost thin metal ring ($30_1$) is 2/9, when the angle ($\alpha$) of inclination of the side surfaces (27) of the drive pulley (6) and the driven pulley (11) is in a range of 6° to 11°.

4. The continuously variable transmission according to claim 1 or 2, wherein the radially inner round edge ($30_1$d) of the innermost thin metal ring ($30_1$) is chamfered in a bevel surface at an angle greater than the angle ($\alpha$) of inclination of the side surfaces (27) of the drive pulley (6) and the driven pulley (11), and the chamfered radially inner round edge ($30_1$d) is merged smoothly into the side surface ($30_1$c) of the innermost thin metal ring ($30_1$).

5. The continuously variable transmission according to claim 1, wherein the radius ($R_1$) of curvature of the round edge ($30_1$d) of the innermost thin metal ring ($30_1$) is determined to satisfy the following condition:

$$y \geq 1.5379x^4 - 3.8442x^3 + 3.5636x^2 - 1.5713x + 0.3725$$

where x = h/t, h is the height of a contact part of the side surface of the innermost thin metal ring ($30_1$) in contact with the side surface (27) of the pulleys (6, 11) from the radially inner circumferential surface ($30_1$a) of the innermost thin ring ($30_1$), t is thickness of the innermost thin metal ring, and y = $R_1$/t.

**Patentansprüche**

1. Stufenlos verstellbares Getriebe mit einer Antriebsriemenscheibe (6), einer Abtriebsriemenscheibe (11) und einem endlosen Metallriemen (15), der sich zwischen der Antriebsriemenscheibe (6) und der Abtriebsriemenscheibe (11) erstreckt, um eine Antriebskraft von der Antriebsriemenscheibe (6) auf die Abtriebsriemenscheibe (11) zu übertragen, wobei die jeweiligen Wirkdurchmesser der Antriebsriemenscheibe (6) und der Abtriebsriemenscheibe (11) stufenlos veränderbar sind, um das Gangänderungsverhältnis zu verändern, wobei der endlose Metallriemen (5) aus dünnen Metallringen (30), die zur Bildung von geschichteten Ringstrukturen (31) geschichtet sind, und einer Mehrzahl von Blöcken (32), die entlang den geschichteten Ringstrukturen (31) angeordnet und daran abgestützt sind, aufgebaut ist, um den endlosen Metallriemen (15) zu bilden,
worin jeder der dünnen Metallringe (30, $30_1$) an der Grenze zwischen einer Seitenoberfläche (30c, $30_1$c) und einer radial inneren Umfangsoberfläche (30a, $30_1$a) davon einen radial inneren Rand (30d, $30_1$d) aufweist, und an der Grenze zwischen der Seitenoberfläche (30c) und einer radial äußeren Umfangsoberfläche (30b) davon einen radial äußeren Rand (30e, $30_1$e) aufweist, wobei die Seitenoberfläche (30c, $30_1$c) des dünnen Metallrings (30, $30_1$) ein mittleres flaches Teil aufweist, und worin die dünnen Metallringe (30) einen innersten dünnen Metallring ($30_1$) enthalten, dessen radialer Innenrand ($30_1$d) mit Seitenoberflächen (27) der Antriebsriemenscheibe (6) und der Abtriebriemenscheibe (11) in Kontakt steht;
**dadurch gekennzeichnet, dass**:

der radial innere Rand (30d, $30_1$d) und der radial äußere Rand (30e, $30_1$e) der dünnen Metallringe (30, 31) mit unterschiedlichen Krümmungsradien gerundet sind; und
die Krümmungsradien ($R_1$, $R_2$) der radial inneren und radial äußeren Ränder ($30_1$d, $30_1$e) des innersten dünnen Metallrings ($30_1$) größer sind als die Krümmungsradien der radial inneren und äußeren Ränder (30d, 30e) der jeweils anderen dünnen Metallringe (30) als dem innersten dünnen Metallring ($30_1$).

2. Stufenlos verstellbares Getriebe nach Anspruch 1, worin der Krümmungsradius ($R_1$) des radial inneren runden Rands ($30_1$d) des innersten dünnen Metallrings ($30_1$) 0,04 mm oder mehr beträgt.

3. Stufenlos verstellbares Getriebe nach Anspruch 1 oder 2, worin ein Verhältnis ($R_1$/t) des Krümmungsradius ($R_1$) des radial inneren runden Rands ($30_1$d) des innersten dünnen Metallrings ($30_1$) und der Dicke (t) des innersten dünnen Metallrings ($30_1$) 2/9 beträgt, wenn der Neigungswinkel ($\alpha$) der Seitenoberflächen (27) der Antriebsriemenscheibe (6) und der Abtriebsriemenscheibe (11) im Bereich von 6° bis 11 ° liegt.

4. Stufenlos verstellbares Getriebe nach Anspruch 1 oder 2, worin der radial innere runde Rand ($30_1$d) des innersten dünnen Metallrings ($30_1$) mit einer Kegeloberfläche mit einem Winkel abgeschrägt ist, der größer ist als der Nei-gungswinkel ($\alpha$) der Seitenoberflächen (27) der Antriebsriemenscheibe (6) und der Abtriebsriemenscheibe (11), und der abgeschrägte, radial innere runde Rand ($30_1$d) glattgängig in die Seitenoberfläche ($30_1$c) des innersten dünnen Metallrings ($30_1$) mündet.

**5.** Stufenlos verstellbares Getriebe nach Anspruch 1, worin der Krümmungsradius (R1) des runden Rands ($30_1$d) des innersten dünnen Metallrings ($30_1$) so bestimmt ist, dass er der folgenden Bedingung genügt:

$$y \geq 1{,}5379x^4 - 3{,}8442x^3 + 3{,}5636x^2 - 1{,}5713x + 0{,}3725$$

wobei x = h/t, wobei h die Höhe eines Kontaktteils der Seitenfläche des innersten dünnen Metallrings ($30_1$) in Kontakt mit der Seitenoberfläche (27) der Riemenscheiben (6, 11) von der radial inneren Umfangsoberfläche ($30_1$a) des innersten dünnen Rings ($30_1$) ist, t die Dicke des innersten dünnen Metallrings ist und y = $R_1$/t.

## Revendications

**1.** Transmission à variation continue ayant une poulie d'entraînement (6), une poulie entraînée (11) et une courroie métallique sans fin (15) étendue entre la poulie d'entraînement (6) et la poulie entraînée (11) pour transmettre une force d'entraînement de la poulie d'entraînement (6) à la poulie entraînée (11), des diamètres respectivement effectifs de la poulie d'entraînement (6) et de la poulie entraînée (11) étant variables de manière continue pour changer le rapport de changement de vitesse, dans laquelle la courroie métallique sans fin (15) est composée de fins anneaux métalliques (30) déposés en couche pour former des structures d'anneaux déposés en couche (31), et une pluralité de blocs (32) agencés le long et supportés sur les structures d'anneaux déposés en couche (31) afin de former la courroie métallique sans fin (15),
dans laquelle chacun des fins anneaux métalliques (30, $30_1$) a un bord radialement interne (30d, $30_1$d) à l'intersection d'une surface latérale (30c, $30_1$c) et d'une surface circonférentielle radialement interne (30a, $30_1$a) de celui-ci, et un bord radialement externe (30e, $30_1$e) à l'intersection de la surface latérale (30c) et d'une surface circonférentielle radialement externe (30b) de celui-ci, dans laquelle la surface latérale (30c, $30_1$c) de chaque anneau métallique fin (30, $30_1$) a une partie centrale plate, et dans laquelle les anneaux métalliques fins (30) comprennent un anneau métallique fin situé le plus à l'intérieur ($30_1$) ayant un bord radialement interne ($30_1$d) en contact avec les surfaces latérales (27) de la poulie d'entraînement (6) et la poulie entraînée (11) ;
**caractérisée en ce que** :

le bord radialement interne (30d, $30_1$d) et le bord radialement externe (30e, $30_1$e) des anneaux métalliques fins (30, $30_1$) sont arrondis avec des rayons de courbure différents ; et
les rayons ($R_1$, $R_2$) de courbure sur les bords radialement interne et radialement externe ($30_1$d, $30_1$e) de l'anneau métallique fin situé le plus à l'intérieur ($30_1$) sont plus grands que les rayons de courbure des bords radialement interne et externe (30d, 30e) des anneaux métalliques fins (30) autres que l'anneau métallique fin situé le plus à l'intérieur ($30_1$), respectivement.

**2.** Transmission à variation continue selon la revendication 1, dans laquelle le rayon ($R_1$) de courbure du bord arrondi radialement interne ($30_1$d) de l'anneau métallique fin situé le plus à l'intérieur ($30_1$) est de 0,04 mm ou plus.

**3.** Transmission à variation continue selon la revendication 1 ou 2, dans laquelle un rapport ($R_1$/t) du rayon ($R_1$) de courbure du bord arrondi radialement interne ($30_1$d) de l'anneau métallique fin situé le plus à l'intérieur ($30_1$) et de l'épaisseur (t) de l'anneau métallique fin situé le plus à l'intérieur ($30_1$) est de 2/9, lorsque l'angle ($\alpha$) d'inclinaison des surfaces latérales (27) de la poulie d'entraînement (6) et de la poulie entraînée (11) est de l'ordre de 6° à 11°.

**4.** Transmission à variation continue selon la revendication 1 ou 2, dans laquelle le bord arrondi radialement interne ($30_1$d) de l'anneau métallique fin situé le plus à l'intérieur ($30_1$) est chanfreiné dans une surface biseautée selon un angle supérieur à l'angle ($\alpha$) d'inclinaison des surfaces latérales (27) de la poulie d'entraînement (6) et de la poulie entraînée (11), et le bord arrondi chanfreiné radialement interne ($30_1$d) se fond doucement dans la surface latérale ($30_1$c) de l'anneau métallique fin situé le plus à l'intérieur ($30_1$).

**5.** Transmission à variation continue selon la revendication 1, dans laquelle le rayon ($R_1$) de courbure du bord arrondi ($30_1$d) de l'anneau métallique fin situé le plus à l'intérieur ($30_1$) est déterminé afin de satisfaire la condition suivante :

$$y \geq 1{,}5379x^4 - 3{,}8442x^3 + 3{,}5636x^2 - 1{,}5713x + 0{,}3725$$

où $x = h/t$, $h$ est la hauteur d'une partie de contact de la surface latérale de l'anneau métallique fin situé le plus à l'intérieur $(30_1)$ en contact avec la surface latérale (27) des poulies (6, 11) à partir de la surface circonférentielle radialement interne $(30_1a)$ de l'anneau fin situé le plus à l'intérieur $(30_1)$, $t$ est l'épaisseur de l'anneau métallique fin situé le plus à l'intérieur et $y = R_1/t$.

## Fig.1

Hydraulic control unit — U₂

Electronic control unit — U₁

Fig.2

EP 1 130 283 B1

Fig.3

Fig.4

V

32

32b

32b

VI

32b    32a    32a    32c    VI

32d

V

Fig.5

32

Fig.6

# Fig.7

Third
thin metal ring

$\longrightarrow \Delta T_3$

$\longrightarrow F_3$

$F_3 \longleftarrow | N_3$

Second
thin metal ring

$\longrightarrow \Delta T_2$

$\longrightarrow F_2$

$F_2 \longleftarrow | N_2$

First
thin metal ring

$\longrightarrow \Delta T_1$

$\longrightarrow F_1$

Blocks

$N_1$

Fig.8

Fig.9

Straight part    Bent part wrapping around the drive pulley    Straight part    Bent part wrapping around the driven pulley    Straight part

Fig.10

Straight part | Bent part wrapping around the drive pulley | Straight part | Bent part wrapping around the driven pulley | Straight part

# Fig.11

Straight part  Bent part wrapping around the drive pulley  Straight part  Bent part wrapping around the driven pulley  Straight part

Fig.12

Fig.13

23

Fig.14

# Fig.15

| Straight part | Bent part wrapping around the drive pulley | Straight part | Bent part wrapping around the driven pulley | Straight part |

Corrected stress differences relating to the interior
and the end of the innermost thin metal ring

Fig.16

Contact ratio: 100% (Pulley side)

$\sigma a * HP = \sigma aHP + 1/3 \sigma mHP$

R0.01
R0.02
R0.03
R0.04
R0.05
R0.06
R0.07
R0.08
R0.09

$\sigma a * = \sigma a + 1/3 \sigma m$

Corrected stress difference $\sigma_{a*}$ (kgf/mm²)

Height from the inner circumference (mm)

♦ Interior
■ End

Fig.17

Fig.18

# Fig.19

| Groove angle (degree) | Radius R | Height h | Pulley Hertz compressive stress | | Internal stress (Innermost thin metal ring) | | | Contact part stress (Innermost thin metal ring) | | |
|---|---|---|---|---|---|---|---|---|---|---|
| | | | $\sigma hp(DR)$ | $\sigma hp(DN)$ | $\sigma a$ | $\sigma m$ | $\sigma a*$ | $\sigma aHP$ | $\sigma mHP$ | $\sigma a*HP$ |
| 11 | 0 | 0 | | | 60 | −8 | 57.33 | | | |
| 11 | 0.01 | 0.0081 | 134.2 | 120.6 | 35.4 | 15.1 | 40.43 | 95.7 | −45.2 | 80.63 |
| 11 | 0.02 | 0.0162 | 94.9 | 85.3 | 33.6 | 15.4 | 38.73 | 76.2 | −27.2 | 67.13 |
| 11 | 0.03 | 0.0243 | 77.5 | 69.6 | 31.6 | 15.7 | 36.83 | 66.4 | −19.1 | 60.03 |
| 11 | 0.04 | 0.0324 | 67.1 | 60.3 | 29.8 | 16.1 | 35.17 | 59.9 | −14.1 | 55.20 |
| 11 | 0.05 | 0.0405 | 60 | 53.9 | 27.9 | 16.4 | 33.37 | 54.9 | −10.6 | 51.37 |
| 11 | 0.06 | 0.0486 | 54.8 | 49.2 | 26.1 | 16.7 | 31.67 | 50.7 | −7.9 | 48.07 |
| 11 | 0.07 | 0.0567 | 50.7 | 45.6 | 23.1 | 17.2 | 28.83 | 47.1 | −5.8 | 45.17 |
| 11 | 0.08 | 0.0647 | 47.5 | 42.6 | 22.4 | 17.3 | 28.17 | 43.9 | −4.2 | 42.50 |
| 11 | 0.09 | 0.0728 | 44.8 | 40.2 | 20.5 | 17.6 | 26.37 | 41.4 | −3.3 | 40.30 |
| | | 0.08 | | | 18.9 | 17.9 | 24.87 | | | |
| | | 0.09 | | | 16.6 | 18.3 | 22.70 | | | |
| | | 0.1 | | | 18.9 | 18.7 | 25.13 | | | |
| | | 0.11 | | | 21.1 | 19.1 | 27.47 | | | |
| | | 0.12 | | | 23.5 | 19.5 | 30.00 | | | |
| | | 0.13 | | | 25.8 | 19.9 | 32.43 | | | |
| | | 0.14 | | | 28.1 | 20.3 | 34.87 | | | |
| | | 0.15 | | | 30.3 | 20.7 | 37.20 | | | |
| | | 0.16 | | | 32.6 | 21.2 | 39.67 | | | |
| | | 0.17 | | | 34.9 | 21.4 | 42.03 | | | |
| | | 0.18 | | | 37.2 | 21.8 | 44.47 | | | |

EP 1 130 283 B1

# Fig.20

EP 1 130 283 B1

h = 0 to 0.04

$$\boxed{\sigma a^*HN + 1/3\, \sigma m + 1/3\, \sigma aH}$$

$$\boxed{\sigma aH = 3\, \sigma a^*HN - 3\, \sigma a - \sigma m}$$

Total contact load on DR: 12.7 kgf   Length of wrap on DR: 234.2 mm

Total contact load on DN: 5.1 kgf   Length of wrap on DN: 116.6 mm

| Radius R of curvature | Height h | Contact part Hertz compressive stress | | Internal stress in the innermost thin metal ring | | | Neck contact part stress in the innermost thin metal ring | | | Ratio y (R/t) | Ratio x (h/t) |
|---|---|---|---|---|---|---|---|---|---|---|---|
| | | $\sigma$ hP (DR) | $\sigma$ hP (DN) | $\sigma$ a | $\sigma$ m | $\sigma$ a* | $\sigma$ aHP | $\sigma$ mHP | $\sigma$ a*HP | | |
| | 0 | | | 60 | -8 | 57.33 | | | | | 0.00 |
| 0.0536 | 0.01 | 58 | 52.09 | 34.9 | 15.2 | 39.97 | 61 | -10.9 | 57.33 | 0.30 | 0.06 |
| 0.0424 | 0.02 | 65.2 | 58.59 | 32.6 | 15.6 | 37.80 | 61.9 | -13.7 | 57.33 | 0.24 | 0.11 |
| 0.0343 | 0.03 | 72.5 | 65.09 | 30.3 | 16 | 35.63 | 62.9 | -16.6 | 57.33 | 0.19 | 0.17 |
| 0.0285 | 0.04 | 79.5 | 71.39 | 28.1 | 16.3 | 33.53 | 63.8 | -19.4 | 57.33 | 0.18 | 0.22 |
| 0.025 | 0.05 | 85 | 76.3 | 25.8 | 16.7 | 31.37 | 64.7 | -22.2 | 57.33 | 0.14 | 0.28 |
| 0.0223 | 0.06 | 89.7 | 80.7 | 23.5 | 17.1 | 29.20 | 65.7 | -25.1 | 57.33 | 0.12 | 0.33 |
| 0.0202 | 0.07 | 94.5 | 84.8 | 21.2 | 17.5 | 27.03 | 66.6 | -27.9 | 57.33 | 0.11 | 0.39 |
| 0.0184 | 0.08 | 99 | 88.9 | 18.9 | 17.9 | 24.87 | 67.6 | -30.8 | 57.33 | 0.10 | 0.44 |
| 0.0167 | 0.09 | 103.89 | 93.3 | 16.9 | 18.3 | 22.60 | 68.5 | -33.6 | 57.33 | 0.09 | 0.50 |
| 0.0153 | 0.1 | 108.8 | 97.5 | 18.9 | 18.7 | 25.13 | 69.5 | -36.5 | 57.33 | 0.09 | 0.56 |
| 0.014 | 0.11 | 113.4 | 101.9 | 21.1 | 19.1 | 27.47 | 70.5 | -39.4 | 57.33 | 0.08 | 0.61 |
| 0.0129 | 0.12 | 118.1 | 106.2 | 23.5 | 19.5 | 30.00 | 71.4 | -42.2 | 57.33 | 0.07 | 0.67 |
| 0.0119 | 0.13 | 122.8 | 110.5 | 25.8 | 19.9 | 32.43 | 72.3 | -45 | 57.33 | 0.07 | 0.72 |
| 0.0111 | 0.14 | 127.5 | 114.4 | 28.1 | 20.3 | 34.87 | 73.3 | -47.9 | 57.33 | 0.06 | 0.78 |
| 0.0103 | 0.15 | 132.3 | 118.8 | 20.3 | 20.7 | 37.20 | 74.3 | -50.8 | 57.33 | 0.06 | 0.83 |
| 0.0096 | 0.16 | 137 | 123.1 | 32.6 | 21.2 | 39.67 | 75.2 | -53.6 | 57.33 | 0.05 | 0.89 |
| 0.009 | 0.17 | 141.7 | 127.1 | 34.9 | 21.4 | 42.03 | 76.1 | -56.4 | 57.33 | 0.05 | 0.94 |
| 0 | 0.18 | | | 37.2 | 21.8 | 44.47 | | | | 0.00 | 1.00 |

# Fig.21

Relation between the height from the inner circumference

and the radius of curvature of the round edge

◆ Group 1

Polynomial (Group 1)

$y = 1.5739 x^4 - 3.8442 x^3 + 3.5636 x^2 - 1.5713 x + 0.3725$

Range meeting condition : $\sigma_{a*} \geqq \sigma_{a*HP}$

$y = R/t$

$x = h/t$

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 6006970 B
- EP 0950830 A
- EP 1130282 A1
- JP HEI1089429 A